# EUROPEAN PATENT APPLICATION

(11) **EP 4 832 110 A1**
(43) Date of publication of application: **28.10.2026**
(21) Application number: 26173415.6
(22) Date of filing: 20.04.2026
(51) Int. Cl.: H01M 4/525, H01M 4/36, H01M 4/1391, H01M 4/02

(54) **POSITIVE ELECTRODE ACTIVE MATERIAL, PREPARATION METHOD THEREOF, AND RECHARGEABLE LITHIUM BATTERIES**

(30) Priority: 24.04.2025 KR 20250053724; 15.04.2026 KR 20260068348
(71) Applicant: SAMSUNG SDI CO., LTD., Yongin-si, Gyeonggi-do 17084 (KR)
(72) Inventor: HWANG, Hoseong, 17084 Yongin-si, Gyeonggi-do (KR); KIM, Teayeop, 17084 Yongin-si, Gyeonggi-do (KR); LEE, Jongjin, 17084 Yongin-si, Gyeonggi-do (KR); JI, Seorin, 17084 Yongin-si, Gyeonggi-do (KR); KIM, Jinyoung, 17084 Yongin-si, Gyeonggi-do (KR)
(74) Representative: Bardehle Pagenberg Partnerschaft mbB Patentanwälte Rechtsanwälte

(57) **Abstract**

Provided is a positive electrode active material including a core particle including a lithium cobalt-based composite oxide, and a carbon coating layer on the surface of the core particle. The carbon coating layer includes carbon nanotubes and graphene having a layered structure in a range of 2 layers to about 50 layers.

## Description

### BACKGROUND

### 1. Field

A positive electrode active material, a preparation method thereof, and a rechargeable lithium battery, are disclosed.

### 2. Description of the Related Art

A portable information device such as a cell phone, a laptop, smart phone, and the like, typically uses a rechargeable lithium battery having high energy density and easy portability as a driving power source. Recently, having a rechargeable lithium battery with high energy density as a driving power source for hybrid or electric vehicles or power storage power source may be advantageous.

Various positive electrode active materials exist to realize rechargeable lithium batteries for applications to the above uses. For example, lithium nickel-based oxide, lithium nickel manganese cobalt composite oxide, lithium nickel cobalt aluminum composite oxide, and lithium cobalt oxide are mainly used as positive electrode active materials.

As research on positive electrode active materials with desired or improved properties such as conductivity and density is increasing, developing positive electrode active materials that exhibit high conductivity and density may be advantageous.

### SUMMARY

The above objects are at least partially achieved by the subject matter of the independent claims. Preferred embodiments are the subject of the dependent claims, and the skilled person will find clues to other suitable aspects of the present invention in the overall disclosure of the present application.

Some example embodiments include a positive electrode active material capable of improving conductivity and density, a method for preparing the positive electrode active material, and a rechargeable lithium battery.

In some example embodiments, a positive electrode active material includes a core particle including a lithium cobalt-based composite oxide; and a carbon coating layer on the surface of the core particle. The carbon coating layer includes carbon nanotubes and graphene having a layered structure in a range of 2 layers to 50 layers.

In some example embodiments, a method for preparing a positive electrode active material includes (i) preparing a core particle including a lithium cobalt-based composite oxide, (ii) pulverizing flake-shaped graphite having an average size (D₅₀) in a range of about 3 µm to about 25 µm to prepare particulate graphite having an average size (D₅₀) of less than or equal to about 2.5 µm, and (iii) dry-mixing the core particle, the particulate graphite, and carbon nanotubes to obtain a positive electrode active material.

In some example embodiments, a rechargeable lithium battery includes a positive electrode including a current collector, and a positive electrode active material layer on the current collector, the positive electrode active material layer including the positive electrode active material; a negative electrode; and an electrolyte.

The positive electrode active material according to some example embodiments may exhibit high pellet density and low powder resistance, and may have improved conductivity. In addition, the positive electrode and rechargeable lithium battery including the positive electrode active material may have improved capacity and energy density.

The method for preparing a positive electrode active material according to some example embodiments may provide a positive electrode active material having desired or improved conductivity while reducing or minimizing the manufacturing cost.

### BRIEF DESCRIPTION OF THE DRAWINGS

FIG. 1 to FIG. 4 are cross-sectional views schematically showing a rechargeable lithium battery according to some example embodiments.
FIG. 5 is a scanning electron microscope image of the surface of the positive electrode active material prepared in Example 1.
FIG. 6 is transmission electron microscope image of the cross-section of a positive electrode active material prepared in Example 1.

### DETAILED DESCRIPTION

Hereinafter, example embodiments are described in detail so that those of ordinary skill in the art can readily exhibit the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

"Combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, and the like, may be exaggerated for clarity, and like reference numerals designate like elements throughout the specification. It is understood that when an element such as a layer, film, region, or substrate is referred to as being "on" another element, the element can be directly on the other element, or intervening elements may also be present therebetween. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope (TEM) image or a scanning electron microscope (SEM) image. Alternatively, it is possible to obtain an average particle diameter value by measuring using a dynamic light scattering method, performing data analysis, counting the number of particles for each particle size range, and calculating the average particle diameter value based on the count. As used herein, when a definition is not otherwise provided, the average particle diameter (D₅₀) may mean the diameter of particles having a cumulative volume of 50 vol% in the particle size distribution. As used herein, when a definition is not otherwise provided, the average particle diameter (D₅₀) means a diameter of particles having a cumulative volume of 50 vol% in the particle size distribution that is obtained by measuring the size (diameter or length of the major axis) of about 20 particles at random in a scanning electron microscope image.

"Or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode Active Material

A positive electrode active material according to some example embodiments includes a core particle including a lithium cobalt-based composite oxide, and a carbon coating layer on the surface of the core particle, wherein the carbon coating layer includes carbon nanotubes and graphene having a layered structure in a range of 2 layers to 50 layers.

Generally, during the manufacturing of a positive electrode, a binder and a conductive material are added to improve electrode plate adhesive strength between the electrode plate and the positive electrode active material and the conductivity of the positive electrode. However, as the usage amount of the binder and the conductive material increases, there may be a challenge in that the energy density of the battery decreases because the amount of the positive electrode active material decreases. Because the positive electrode active material according to some example embodiments includes a carbon coating layer including carbon nanotubes and graphene of a layered structure in a range of 2 layers to 50 layers, the carbon coating may be coated on the surface of the active material particles (core particles) even with a low amount of carbon material, so that the adhesive strength and the conductivity may be enhanced. Therefore, high energy density and conductivity may be secured even if (when) a small amount of binder and conductive material is used during the manufacturing of the positive electrode. In addition, as the amount of the binder and conductive material used in the manufacturing of the positive electrode decreases, the amount of the positive electrode active material may increase, so that a rechargeable lithium battery including the positive electrode active material may exhibit high capacity and high energy density characteristics.

When forming a carbon coating layer using a crystalline carbon material with low dispersibility, it may be challenging to evenly form the carbon coating layer on the surface of the core particle because the carbon materials agglomerate with each other. However, the positive electrode active material according to some example embodiments may exhibit a carbon coating layer having a thin and uniform, or substantially uniform, thickness by selecting the crystalline carbon material as desired, which is the source material of the carbon coating layer, and coating it under appropriate or desired conditions. The carbon coating layer has a layered structure exhibiting a dense crystal structure and may include crystalline carbon formed in a two-dimensional plane on the surface of the core particle. Accordingly, the resistance of the positive electrode active material is lowered, pellet density is improved, intercalation and deintercalation of lithium ions may be performed more effectively, and ionic conductivity may be improved because lithium ions diffuse along the layered structure. Also, the positive electrode including the positive electrode active material exhibits desired or improved electronic conductivity even if (when) it does not include a separate conductive material or includes a substantially small amount of conductive material, and the positive electrode including such a positive electrode active material can exhibit high electrode plate adhesive strength even if (when) it includes a substantially small amount of binder. A rechargeable lithium battery including such a positive electrode may exhibit high capacity and energy density, and overall electrochemical performance such as charge/discharge efficiency and rate characteristics may be improved.

A method of inducing a carbon coating layer including graphene on the surface of the core particle of a positive electrode active material using graphene as a raw material has been proposed, but the coating process is complicated or the cost is high, so there is a limit to commercialization, and there is also a limit to securing a carbon coating layer in a film form having a uniform, or substantially uniform, thickness on the surface of the core particle. Also, technologies for coating amorphous carbon on the surface of core particle have been proposed, but uniform coating may be challenging, and there is a limit to increasing energy density while increasing electronic conductivity and lowering resistance of the positive electrode. The positive electrode active material according to some example embodiments has succeeded in introducing graphene in a uniform, or substantially uniform, film form having a thickness of 2 atomic layers to 50 atomic layers, or several to tens of nanometers, as a carbon coating layer on the surface of the core particle. The positive electrode active material according to some example embodiments can exhibit higher electronic conductivity and ionic conductivity, can increase energy density while lowering resistance, and may exhibit improved electrochemical performance compared to the case of coating amorphous carbon or coating other crystalline carbons. Also, the positive electrode active material according to some example embodiments may apply a dry coating method while using graphite, which is a low-cost material, and thus cost reduction is possible, processability is good, and is advantageous for mass production.

In addition, because the carbon coating layer of the positive electrode active material according to some example embodiments includes carbon nanotubes in addition to graphene, the pellet density of the positive electrode active material is further improved, and thus the energy density of a rechargeable lithium battery including such positive electrode active material may also be improved or maximized. For example, through the lubricating properties of the carbon material, which is the source material of the carbon coating layer, a carbon coating layer with a greater amount is uniformly, or substantially uniformly, provided on the surface of the core particle, thereby improving or maximizing the pellet density of the positive electrode active material. At the same time, when the carbon coating layer includes both graphene and carbon nanotubes, the powder resistance of the positive electrode active material is further reduced, thereby improving or maximizing the electrical conductivity of the positive electrode active material.

For example, carbon nanotubes, as a source material for carbon coating layers, may increase electronic conductivity even in substantially small quantities, but because it is challenging to evenly coat the surface of core particles, the coating properties may be poor, such as being unevenly coated, agglomerated on the surface, or separated from the surface. Accordingly, when carbon nanotubes alone are coated on the surface of core particle, the powder resistance may increase, resulting in a decrease in electronic conductivity and a decrease in pellet density. In addition, when graphene is coated solely on the surface of the core particle, graphene is coated in a sheet shape on the positive electrode active material particle, thereby increasing lubrication properties, lowering powder resistance, and increasing pellet density, but there is a limit to increasing electronic conductivity. However, according to some example embodiments, the positive electrode active material includes carbon nanotubes in addition to graphene in the carbon coating layer, and when graphene is coated in a sheet shape on the surface of the core particle, the carbon nanotubes may be strongly adhered within the sheet or to the surface of the sheet. That is, because the graphene and carbon nanotubes may be uniformly, or substantially uniformly, coated simultaneously or contemporaneously on the surface of the core particle, the positive electrode active material may obtain lubricating properties while improving or maximizing electronic conductivity.

Hereinafter, the configuration of the positive electrode active material according to some example embodiments is described in detail.

### Core Particle

The core particle includes a lithium cobalt-based composite oxide. For example, the core particle may include a lithium cobalt-based composite oxide represented by Chemical Formula 1:

Chemical Formula 1: Liₐ₁Coₓ₁M¹_{y1}O_{2-b1}X_{b1}.

In Chemical Formula 1, 0.9≤a1≤1.8, 0.7≤x1≤1, 0≤y1≤0.3, 0.9≤x1+y1≤1.1, and 0≤b1≤0.1, M¹ is or includes one or more elements of Al, B, Ba, Ca, Ce, Cr, Cu, Fe, Mg, Mn, Mo, Ni, Se, Si, Sn, Sr, Ti, V, W, Y, Zn, and Zr, and X is or includes one or more elements of F, P, and S.

When the core particle includes the lithium cobalt-based composite oxide represented by Chemical Formula 1, high-voltage design of a rechargeable lithium battery is possible, and since gas generation at high voltage is reduced, the reliability and safety of the rechargeable lithium battery can be improved, and battery resistance may be reduced or suppressed by exerting a synergistic effect in a rapid charging system.

An average particle diameter (D₅₀) of the core particle may be in a range of about 1 µm to about 25 µm, about 3 µm to about 22 µm, or about 10 µm to about 18 µm. If (when) the average particle diameter (D₅₀) of the core particle satisfies the above range, structural stability of the positive electrode active material can be promoted while electrical conductivity and pellet density of the positive electrode active material is improved. Also, positive electrode slurry stability and electrode plate mixture density in the positive electrode manufacturing process may be improved. In addition, because a movement path for lithium ions to reach the surface of the positive electrode active material becomes longer, the formation of impurities occurring on the surface of the positive electrode active material can be reduced or minimized. Accordingly, problems that may occur due to surface impurities, for example, reduction in battery capacity, increase in interface resistance due to interference with the movement of lithium ions, gas generation due to decomposition of impurities, and resultant swelling of the battery can be reduced or prevented. As a result, capacity characteristics, high-temperature stability, and charge/discharge characteristics of a rechargeable lithium battery including the positive electrode active material can be improved. Herein, the average particle diameter (D₅₀) of the core particle may be obtained by randomly selecting about 20 particles from a scanning electron microscope image of the core particle, measuring the particle diameters thereof (diameter, major diameter, or length of the major axis) to obtain a particle size distribution, and then taking the size of particles having a cumulative volume of 50 vol% from the particle size distribution as the average particle diameter.

The core particle may include first particles having an average particle diameter (D₅₀) in a range of about 8 µm to about 20 µm and a second particle having an average particle diameter (D₅₀) in a range of about 0.5 µm to about 6 µm. At this time, the first particles having a relatively large average particle diameter may be expressed as large particles, and the second particles having a relatively small average particle diameter may be expressed as small particles. Because the positive electrode active material layer includes the large particles and the small particles at the same time, capacity and energy density may be improved or maximized, and long cycle-life characteristics may be exhibited.

The average particle diameter (D₅₀) of the first particle may be in a range of about 9 µm to about 20 µm, about 10 µm to about 18 µm, or about 12 µm to about 16 µm. Herein, the average particle diameter (D₅₀) of the first particles may be obtained by randomly selecting about 20 particles in a scanning electron microscope (SEM) image of the first particles, measuring the particle diameter (diameter, major diameter, or length of the major axis) to obtain a particle size distribution, and then taking the size of particles having a cumulative volume of 50 vol% from the particle size distribution as the average particle diameter.

An average particle diameter (D₅₀) of the second particles may be in a range of about 0.8 µm to about 6 µm, about 1.0 µm to about 5.8 µm, or about 1.0 µm to about 5.5 µm. Herein, the average particle diameter (D₅₀) of the second particles may be one obtained by randomly selecting about 20 particles in a scanning electron microscope (SEM) image of the second particles, measuring the particle diameter (diameter, major diameter, or length of the major axis) to obtain a particle size distribution, and then taking the size of particles having a cumulative volume of 50 vol% from the particle size distribution as the average particle diameter.

### Carbon Coating Layer

The carbon coating layer is disposed on the surface of the core particle and includes carbon nanotubes and graphene having a layered structure in a range of 2 layers to 50 layers. Through the carbon coating layer, conductivity and adhesive strength with the electrode plate may be secured even if (when) a small amount of binder and conductive material is used during the manufacturing of the positive electrode. Also, as the amount of the binder or the conductive material used during the manufacturing of the positive electrode decreases, the amount of the positive electrode active material may be increased, so that a rechargeable lithium battery may exhibit high capacity and high energy density characteristics. For example, the carbon coating layer includes crystalline carbon formed in a two-dimensional plane on the surface of the core particle and may have a thin and uniform, or substantially uniform, thickness. Also, the graphene of the carbon coating layer may have a layered structure exhibiting a dense crystal structure. Accordingly, electronic conductivity of the positive electrode active material is improved and interface resistance can be lowered, intercalation and deintercalation of lithium ions may be performed more effectively, and ionic conductivity may be improved because lithium ions diffuse along the layered structure.

In addition, because the carbon coating layer includes carbon nanotubes together with graphene, the electrical conductivity and pellet density of the positive electrode active material may be further improved through the synergistic effect of graphene and carbon nanotubes. For example, even if (when) the content of graphene and carbon nanotubes is extremely or substantially small, the capacity and energy density of a rechargeable lithium battery can be improved while ensuring the conductivity of the positive electrode and adhesion to the electrode plate. For example, when the carbon coating layer includes both graphene and carbon nanotubes, higher electrical conductivity and pellet density may be achieved with a lower amount than when graphene or carbon nanotubes are used alone. For example, when graphene is coated in a sheet shape on the surface of the core particle, carbon nanotubes may be strongly adhered within the sheet or to the surface of the sheet. That is, because the graphene and carbon nanotubes can be uniformly, or substantially uniformly, coated simultaneously or contemporaneously on the surface of the core particle, the positive electrode active material may obtain lubricating properties while improving or maximizing electronic conductivity.

For example, the graphene and the carbon nanotubes may be combined with each other and exist on a single sheet plane. As another example, when graphene is coated in a sheet shape on the surface of a core particle, carbon nanotubes in the form of fibers may be disposed on the graphene sheet. As another example, the positive electrode active material may include a first coating layer disposed on the surface of the core particle and including graphene having a layered structure in a range of 2 layers to 50 layers, and a second coating layer disposed on the first coating layer and including carbon nanotubes.

The layered structure in a range of 2 layers to 50 layers may be expressed as a layered structure of 2 atomic layers to 50 atomic layers. As an example, the carbon coating layer may include graphene of a layered structure of 2 layers to 48 layers, 5 layers to 45 layers, 7 layers to 40 layers, or 10 layers to 35 layers. The number of layers of the layered structure may be measured in a high-resolution transmission electron microscope (HR-TEM) image of the positive electrode active material particle.

The interlayer spacing (d₀₀₂) of the layered structure may be in a range of about 0.320 nm to about 0.350 nm, for example, about 0.325 nm to about 0.348 nm, about 0.328 nm to about 0.345 nm, or about 0.330 nm to about 0.342 nm. If (when) the interlayer spacing (d₀₀₂) of the layered structure satisfies the above range, the pellet density and conductivity of the positive electrode active material may be further improved. Herein, the interlayer spacing (d₀₀₂) may be measured by a method known to those skilled in the art. For example, the interlayer spacing (d₀₀₂) of the layered structure may be measured by obtaining the peak of the (002) plane through X-ray diffraction (XRD) of the carbon coating layer and then analyzing the peak of the (002) plane. Herein, the (002) plane represents the range of 25.0° < 2θ < 27.0°, where 2θ represents the diffraction angle. For example, XRD measurement data may be subjected to noise removal (baseline setting), and the like, using a conventional program equipped in the XRD device as a data processing and analysis program. Additionally, the peak profile of the peak on the (002) plane may be fitted with a conventional fitting function such as a Gaussian function, a Lorenz function, and the like. For example, the interlayer spacing (d₀₀₂) of the layered structure may be expressed by a method of measuring the interlayer spacing (d₀₀₂) of the particulate graphite, and the interlayer spacing (d₀₀₂) of the particulate graphite may be measured through XRD analysis of the particulate graphite. The number of layers in the layered structure, the interlayer spacing (d₀₀₂), and the thickness of the coating layer are determined as average values obtained from measurements at multiple randomly selected locations on the cross-section of the core particles via HR-TEM. It is noted that the correlation between these parameters follows the physical characteristics of the graphene coating, where the total thickness of the coating layer is the product of the number of layers and the average interlayer spacing.

The graphene may have a ratio (I_{D}/I_{G}) of a peak intensity (I_{D}) near 1350 cm⁻¹ to a peak intensity (I_{G}) near 1580 cm⁻¹ in a Raman spectrum in a range of about 0.15 to about 0.50, and for example, about 0.15 to about 0.45, about 0.18 to about 0.45, or about 0.20 to about 0.40. If (when) the value of I_{D}/I_{G} of the graphene satisfies the above range, the pellet density and conductivity of the positive electrode active material may be improved or maximized. For instance, the Raman spectra may be measured using a Raman spectrometer (e.g., ICRM7000 (Renishaw), etc.) under the conditions of a laser wavelength of about 632 nm and a lowest Raman shift of about 946 cm⁻¹. The peak intensity ratios described herein are obtained from peaks observed in the Raman shift range starting from the lowest Raman shift of about 946 cm⁻¹. These measurement conditions are standard in the art, and it would be within the ability of a person skilled in the art to adjust these parameters, such as laser power or exposure time, while maintaining the relative trend of the peak intensity ratios, to ensure reproducibility.

The thickness of the graphene may be less than or equal to about 20 nm, and the size of the graphene may be less than or equal to about 2.5 µm. For example, the thickness of the graphene may be less than or equal to about 19 nm, less than or equal to about 18 nm, less than or equal to about 17 nm, less than or equal to about 16 nm, or less than or equal to about 15 nm, and may be greater than or equal to about 1 nm, greater than or equal to about 2 nm, greater than or equal to about 3 nm, greater than or equal to about 4 nm, or greater than or equal to about 5 nm. If (when) the thickness of the graphene satisfies the above range, the positive electrode active material may further improve pellet density and conductivity. Herein, the thickness of graphene may be measured through a Raman spectrum. For example, the thickness of graphene can be measured based on a ratio of a peak intensity near 1580 cm⁻¹ to a peak intensity near 2700 cm⁻¹ in a Raman spectrum. However, the present disclosure is not limited thereto, and the thickness of the graphene may be measured through, for example, a transmission electron microscope (TEM), a scanning electron microscope (SEM), an atomic force microscope (AFM), a time-of-flight secondary ion mass spectrometry (TOF-SIMS), an X-ray photoelectron spectroscopy (XPS), or an energy-dispersive spectroscopy (EDS) analysis.

For example, the size of the graphene may be less than or equal to about 1.5 µm, less than or equal to about 1.0 µm, less than about 1.0 µm, or less than or equal to about 0.5 µm, and may be greater than or equal to about 0.01 µm, greater than or equal to about 0.05 µm, or greater than or equal to about 0.08 µm. If (when) the size of the graphene satisfies the above range, the positive electrode active material may further improve pellet density and conductivity. Herein, as for the size of graphene, because graphene is in a sheet shape, it means the longest length or the length of the major axis in a portion corresponding to a surface of the sheet, not the thickness of the sheet. The size of graphene may mean the longest length among lines connecting one point to another point on one surface of the graphene sheet. For example, the size of the graphene may be measured through TEM, SEM, AFM, TOF-SIMS, XPS, or EDS analysis.

The graphene of the carbon coating layer may be derived from particulate graphite having an average size of less than or equal to about 2.5 µm. In this case, a carbon coating layer may be formed with a uniform, or substantially uniform, thickness on the surface of the core particle, and accordingly, the positive electrode active material may have improved or maximized pellet density and conductivity. In addition, structural stability of the positive electrode active material may be improved, side reactions with the electrolyte may be effectively reduced or suppressed, gas generation amount under high-voltage and high-temperature conditions may be reduced, and long cycle-life characteristics may be exhibited.

The particulate graphite may be or include a plate-shaped particle. The average size (D₅₀) of the particulate graphite may be less than or equal to about 2.5 µm, for example, less than or equal to about 1.5 µm, less than or equal to about 1.0 µm, less than about 1 µm, or less than or equal to about 0.5 µm, and may be greater than or equal to about 0.01 µm, greater than or equal to about 0.05 µm, or greater than or equal to about 0.08 µm. If (when) the average size of the above particulate graphite satisfies the above range, a carbon coating layer may be formed with a uniform, or substantially uniform, thickness on the surface of the core particle, and the positive electrode active material may have improved or maximized pellet density and conductivity. Herein, the average size (D₅₀) of the particulate graphite may be measured through a particle size analyzer, and means the size of particles having a cumulative volume of 50 vol% in the particle size distribution. In addition, the particle size may indicate a length of the longest axis in the plane direction perpendicular to the thickness direction in the plate shape.

A thickness of the particulate graphite may be less than or equal to about 1.0 µm, and for example, it may be less than about 1 µm, less than or equal to about 0.9 µm, less than or equal to about 0.7 µm, or less than or equal to about 0.5 µm, and may be greater than or equal to about 0.01 µm, greater than or equal to about 0.05 µm, or greater than or equal to about 0.08 µm. If (when) the thickness of the particulate graphite satisfies the above range, a carbon coating layer may be formed with a uniform, or substantially uniform, thickness on the surface of the core particle, and the positive electrode active material may have improved or maximized pellet density and conductivity. Herein, the thickness of the particulate graphite may be measured through a transmission electron microscope for the particulate graphite. Alternatively, the thickness of the particulate graphite may be measured through a transmission electron microscope for a cross-section of a particulate graphite particle cut by Focused Ion Beam (FIB). However, the present disclosure is not limited thereto, and the thickness of the particulate graphite may be measured through, for example, SEM, TEM, TOF-SIMS, XPS, AFM, or EDS analysis, and the like, and may be measured through a TEM-EDS line profile.

The particulate graphite may have a ratio (I_{D}/I_{G}) of a peak intensity (I_{D}) near 1350 cm⁻¹ to a peak intensity (I_{G}) near 1580 cm⁻¹ in a Raman spectrum in a range of about 0.15 to about 0.50, for example, about 0.15 to about 0.45, about 0.18 to about 0.45, or about 0.20 to about 0.40. If (when) the value of I_{D}/I_{G} of the particulate graphite satisfies the above range, the carbon coating layer may be formed with a uniform, or substantially uniform, thickness on the surface of the core particle, and the pellet density and conductivity of the positive electrode active material may be improved or maximized.

The graphene of the carbon coating layer may be included in an amount in a range of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.5 wt%, or about 0.05 wt% to about 0.8 wt% based on 100 wt% of the total weight of the positive electrode active material. If (when) the amount of the graphene satisfies the above range, the pellet density and conductivity of the positive electrode active material may be secured, while improving the high-capacity and high-energy density characteristics of the rechargeable lithium battery. For example, even if (when) the amount of the graphene is a substantially small amount of less than about 1 wt%, the graphene can be coated on the surface of the core particle, thereby increasing the electrical conductivity of the positive electrode active material, increasing the pellet density, and increasing the density of the positive electrode.

The carbon nanotubes may include at least one of a single-walled carbon nanotubes (SWCNTs), thin-walled carbon nanotubes (TWCNTs), and multi-walled carbon nanotubes (MWCNTs).

An average length of the carbon nanotubes may be in a range of about 0.1 µm to about 35 µm, for example, about 0.3 µm to about 30 µm, about 0.5 µm to about 25 µm, about 1 µm to about 20 µm, about 3 µm to about 18 µm, or about 5 µm to about 15 µm. If (when) the average length of the carbon nanotubes satisfies the above range, a carbon coating layer may be formed with a uniform, or substantially uniform, thickness on the surface of the core particle, and the positive electrode active material may have improved or maximized pellet density and conductivity. Herein, the length of a carbon nanotube refers to a length of the major axis passing through the center of a carbon nanotube unit. For example, the average length of carbon nanotubes may be obtained by selecting about 20 carbon nanotubes randomly from the results observed with SEM, measuring their lengths, and taking the average value by calculation.

An average diameter of the carbon nanotubes may be in a range of about 1 nm to about 50 nm, for example, about 1 nm to about 40 nm, about 1.5 nm to about 30 nm, about 1.8 nm to about 20 nm, or about 2 nm to about 15 nm. Herein, the diameter of a carbon nanotube means a length of the short axis that passes through the center of a unit of the carbon nanotube and is perpendicular to the major axis of the carbon nanotube. For example, the average diameter of carbon nanotubes can be obtained by selecting about 20 carbon nanotubes randomly from the results observed by TEM, measuring their diameters, and taking the average value by calculation.

The carbon nanotubes of the carbon coating layer may be included in an amount in a range of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.5 wt%, or about 0.05 wt% to about 0.8 wt% based on 100 wt% of the total weight of the positive electrode active material. If (when) the amount of carbon nanotubes satisfies the above range, the pellet density and conductivity of the positive electrode active material may be secured, while improving the high-capacity and high-energy density characteristics of the rechargeable lithium battery. For example, even if (when) the amount of the carbon nanotubes is a substantially small amount of less than about 1 wt%, the carbon nanotubes may increase the electrical conductivity of the positive electrode active material, increase the pellet density, and increase the density of the positive electrode.

The carbon coating layer may be in a form of a film that continuously, or substantially continuously, surrounds the surface of the core particle, for example, or may be in the form of a shell that surrounds the entire surface of the core particle. This is distinct from a structure in which only a portion of the surface of the core particle is partially coated. When the carbon coating layer is formed in a form surrounding the surface of the core particle as a whole, the pellet density and conductivity of the positive electrode active material may be improved or maximized. In addition, electrode plate adhesive strength of the positive electrode active material may be improved, resistance does not rise or capacity does not decrease, structural stability is improved, side reactions with the electrolyte may be effectively reduced or suppressed, gas generation amount under high-voltage and high-temperature conditions may be reduced, and long-life characteristics may be exhibited.

A thickness of the carbon coating layer may be in a range of about 3 nm to about 50 nm, and for example, about 3 nm to about 45 nm, about 3 nm to about 40 nm, about 3 nm to about 35 nm, about 3 nm to about 30 nm, about 4 nm to about 20 nm, or about 5 nm to about 15 nm. If (when) the thickness of the carbon coating layer satisfies the above range, structural stability of the positive electrode active material may be improved and side reactions with the electrolyte may be effectively reduced or suppressed without increasing resistance or decreasing capacity due to the carbon coating layer. For example, the thickness of the carbon coating layer may be measured by a transmission electron microscope on the cross-section of the positive electrode active material particles cut by FIB. However, the present disclosure is not limited thereto, and the thickness of the carbon coating layer may be measured through, for example, SEM, AFM, TOF-SIMS, XPS, or EDS analysis, and may be measured through a TEM-EDS line profile.

As an example, the carbon coating layer may have a uniform, or substantially uniform, thickness while having a thin thickness at a level of several nanometers to tens of nanometers. For example, a difference between the highest and lowest thicknesses of the carbon coating layer may be less than or equal to about 30 nm, for example, less than or equal to about 25 nm, less than or equal to about 20 nm, or less than or equal to about 15 nm, and may be greater than or equal to about 0.30 nm, greater than or equal to about 0.33 nm, greater than or equal to about 0.35 nm, or greater than or equal to about 0.40 nm. The fact that the difference between the highest thickness and the lowest thickness of the carbon coating layer satisfies the above range means that the carbon coating layer of a uniform, or substantially uniform, thickness is formed in a film form on the surface of the positive electrode active material particle, and accordingly, the pellet density and conductivity of the positive electrode active material may be improved or maximized. Herein, the highest and lowest thicknesses of the carbon coating layer may be measured based on an electron microscope image of the positive electrode active material. For example, in an electron microscope image of a cross-section of the positive electrode active material particle, the thickness of the thickest portion of the cross-section of the carbon coating layer may be defined as the highest thickness of the carbon coating layer, and the thickness of the thinnest portion may be defined as the lowest thickness of the carbon coating layer. A thickness of the carbon coating layer may be a vertical distance from the outer surface of the core particle to the outer surface of the carbon coating layer. For example, a scanning electron microscope or a transmission electron microscope may be used as an electron microscope.

The pellet density of the positive electrode active material may be greater than or equal to about 4.35 g/cm³, and the powder resistance of the positive electrode active material may be less than or equal to about 10,000 Ω·cm. For example, the pellet density of the positive electrode active material may be greater than or equal to about 4.355 g/cm³, greater than or equal to about 4.36 g/cm³, greater than or equal to about 4.365 g/cm³, or greater than or equal to about 4.37 g/cm³, and may be less than or equal to about 20 g/cm³, less than or equal to about 18 g/cm³, less than or equal to about 15 g/cm³, less than or equal to about 10 g/cm³, or less than or equal to about 8 g/cm³. If (when) the pellet density of the positive electrode active material satisfies the above range, the density of the positive electrode may be improved, and the electrochemical properties such as capacity, initial efficiency, and cycle-life characteristics of the rechargeable lithium battery may be improved. Herein, the pellet density refers to a density measured by pressing the positive electrode active material at a certain pressure. For example, the pellet density refers to a density measured for a pellet formed by pressing a positive electrode active material at a pressure of about 9 tons for about 30 seconds.

For example, the powder resistance of the positive electrode active material may be less than or equal to about 9,000 Ω·cm, less than or equal to about 8,000 Ω·cm, less than or equal to about 7,000 Ω·cm, less than or equal to about 6,000 Ω·cm, less than or equal to about 5,000 Ω·cm, less than or equal to about 4,000 Ω·cm, less than or equal to about 3,000 Ω·cm, or less than or equal to about 2,000 Ω·cm, and may be greater than or equal to about 50 Ω·cm, greater than or equal to about 100 Ω·cm, greater than or equal to about 150 Ω·cm, greater than or equal to about 200 Ω·cm, greater than or equal to about 500 Ω·cm, greater than or equal to about 1,000 Ω·cm, greater than or equal to about 1,500 Ω·cm, or greater than or equal to about 1,800 Ω·cm. The fact that the powder resistance of the positive electrode active material satisfies the above range means that the conductivity of the positive electrode active material is exhibited as desired, and thus electrochemical characteristics such as capacity, initial efficiency, and cycle-life characteristics of a rechargeable lithium battery can be improved. For example, the powder resistance of the positive electrode active material may be measured using a powder resistance meter, and may be represented by a powder resistance measured at 20 kN by pressurizing the positive electrode active material particles from about 0 kN to about 20 kN.

### Method for Preparing Positive Electrode Active Material

A method for preparing a positive electrode active material according to some example embodiments includes: (i) preparing a core particle including a lithium cobalt-based composite oxide; (ii) pulverizing flake-shaped graphite having an average size (D₅₀) in a range of about 3 µm to about 25 µm to prepare particulate graphite having an average size (D₅₀) of less than or equal to about 2.5 µm; and (iii) dry-mixing the core particle, the particulate graphite, and carbon nanotubes to obtain a positive electrode active material.

The method for preparing a positive electrode active material according to some example embodiments may form a carbon coating layer including carbon nanotubes and graphene having a layered structure in a range of 2 layers to 50 layers on the surface of a core particle using carbon nanotubes and particulate graphite. Accordingly, a positive electrode active material having high conductivity and pellet density may be prepared while reducing or minimizing the manufacturing cost, and even when a small amount of binder and conductive material is used during the manufacturing of the positive electrode, adhesive strength to the electrode plate and conductivity may be secured. In addition, as the amount of the binder used during the manufacturing of the positive electrode decreases, the amount of the positive electrode active material can be increased, so that a rechargeable lithium battery including the positive electrode active material may exhibit high capacity and high energy density characteristics.

Hereinafter, the configuration of the method for preparing the positive electrode active material according to some example embodiments is described in detail.

### (i) Step of Preparing Core Particle

The core particle including a lithium cobalt-based composite oxide are prepared. The core particle prepared in the step (i) may be described identically to the core particle in the positive electrode active material described above, and thus detailed description thereof is omitted.

### (ii) Step of Preparing Particulate graphite

The flake-shaped graphite having an average size (D₅₀) in a range of about 3 µm to about 25 µm is ground to prepare particulate graphite having an average size (D₅₀) of less than or equal to about 2.5 µm. Specific physical properties of the particulate graphite prepared in the step (ii), for example, average size, thickness, I_{D}/I_{G} value, and the like, may be described identically to the physical properties of the particulate graphite in the positive electrode active material described above, and thus detailed description thereof is omitted.

The average size (D₅₀) of the flake-shaped graphite used in the step (ii) may be less than or equal to about 20 µm, less than or equal to about 18 µm, less than or equal to about 15 µm, less than or equal to about 12 µm, or less than or equal to about 10, and may be greater than or equal to about 4 µm, greater than or equal to about 5 µm, or greater than or equal to about 6 µm. Herein, the average size of the flake-shaped graphite may be measured from a scanning electron microscope image. Herein, the average size (D₅₀) of the flake-shaped graphite may be measured through a particle size analyzer, and it means a size of particles where a cumulative volume is 50 vol% in a particle size distribution. In addition, the particle size here may mean a length of the longest axis in the plane direction perpendicular to the thickness direction in the plate shape.

The flake-shaped graphite may have a ratio (I_{D}/I_{G}) of a peak intensity (I_{D}) near 1350 cm⁻¹ to a peak intensity (I_{G}) near 1580 cm⁻¹ in a Raman spectrum in a range of about 0.01 to about 0.15, or greater than or equal to 0.01 and less than about 0.15, for example, about 0.02 to about 0.14, about 0.08 to about 0.14, or about 0.1 to about 0.14.

In the step (ii), the pulverizing of flake-shaped graphite may be performed using a milling process. The milling process may utilize a method known to those skilled in the art, and for example, may utilize a device such as a ball mill, a bead mill, a jet mill, a pin mill, a roller mill, a hybrid mill, a colloid mill, or an air classifier mill (ACM).

In the step (ii), the flake-shaped graphite may be pulverized by a ball milling method, and the ball milling uses zirconia beads having a size in a range of about 1 mm to about 25 mm, and may be performed at a speed in a range of about 200 rpm to about 5,000 rpm for about 30 minutes to about 4 hours. The size of the zirconia beads may be in a range of about 1.2 mm to about 23 mm, about 1.3 mm to about 21 mm, or about 1.5 mm to about 20 mm. Additionally, the pulverizing of the flake-shaped graphite may be performed under conditions of a range of about 250 rpm to about 4,500 rpm, about 300 rpm to about 4,000 rpm, about 400 rpm to about 3,000 rpm, or about 600 rpm to about 2,000 rpm. Additionally, the pulverizing of the flake-shaped graphite may be performed for a duration in a range of about 30 minutes to about 3 hours, or about 35 minutes to about 3 hours. If (when) the size of the beads, the pulverization speed, or the pulverization time each satisfy the above ranges, the particle size of the particulate graphite may be controlled to the desired level.

### (iii) Step of Obtaining Positive Electrode Active Material

The core particle, particulate graphite, and carbon nanotube are dry mixed to obtain a positive electrode active material. In the step (iii), crystalline carbon derived from particulate graphite is coated on the surface of the core particle, and a carbon coating layer including graphene of a layered structure in a range of 2 layers to 50 layers may be formed on the surface of the core particle. At the same time, in the step (iii), the carbon coating layer formed on the surface of the core particle includes carbon nanotubes. Accordingly, the prepared positive electrode active material may have improved conductivity and pellet density. In addition, because the carbon coating layer is formed with a thin and uniform, or substantially uniform, thickness on the surface of the core particle in the step (iii), conductivity and adhesive strength with an electrode plate may be secured even if (when) a small amount of binder is used during the manufacturing of the positive electrode. In addition, as the amount of the binder used during the manufacturing of the positive electrode decreases, the amount of the positive electrode active material may be increased, so that a rechargeable lithium battery may exhibit high capacity and high energy density characteristics. The carbon nanotubes used in the step (iii) may be described in the same way as the carbon nanotubes in the positive electrode active material described above, and the carbon coating layer formed in the step (iii) may be described in the same way as the carbon coating layer in the positive electrode active material described above, and thus a detailed description thereof is omitted.

The particulate graphite may be mixed in an amount in a range of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.5 wt%, or about 0.05 wt% to about 0.8 wt% based on 100 wt% of the total weight of the core particle, the particulate graphite, and the carbon nanotubes. If (when) the mixing amount of particulate graphite satisfies the above range, high capacity and high energy density characteristics of a rechargeable lithium battery may be improved while improving the pellet density and conductivity of the positive electrode active material. For example, even if (when) the amount of the particulate graphite is a substantially small amount of less than about 1 wt%, the particulate graphite may be coated on the surface of the core particles as desired, thereby increasing the electrical conductivity of the positive electrode active material and increasing the density of the positive electrode.

The carbon nanotubes may be mixed in an amount in a range of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.5 wt%, or about 0.05 wt% to about 0.8 wt% based on 100 wt% of the total weight of the core particles, the particulate graphite, and the carbon nanotubes. If (when) the amount of carbon nanotubes satisfies the above range, the pellet density and conductivity of the positive electrode active material may be secured, while improving the high-capacity and high-energy density characteristics of the rechargeable lithium battery. For example, even if (when) the amount of the carbon nanotubes mixed is an extremely small amount of less than about 1 wt%, the carbon nanotubes may increase the electrical conductivity of the positive electrode active material, increase the pellet density, and increase the density of the positive electrode.

The step (iii) may be performed by mixing core particle, particulate graphite, and carbon nanotubes, and applying shear force. In this case, while crystalline carbon derived from particulate graphite is positioned in a two-dimensional plane on the surface of the core particle, a carbon coating layer including graphene of a layered structure exhibiting a dense crystal structure may be formed. For example, this process may be performed using a device for applying shear force, for example, a device having a blade inside, but is not limited thereto.

In the step (iii), the core particle, particulate graphite, and carbon nanotubes may be mixed using a mixer such as a Nobilta mixer, and the core particle, particulate graphite, and carbon nanotubes may be mixed at a shear rate in a range of about 1,000 s⁻¹ to about 9,000 s⁻¹ and a blade rotation speed of less than or equal to about 20 m/s.

The core particle, particulate graphite, and carbon nanotube may be mixed at a shear rate in a range of about 1,500 s⁻¹ to about 8,800 s⁻¹, about 2,000 s⁻¹ to about 8,800 s⁻¹, or about 2,500 s⁻¹ to about 8,500 s⁻¹. If (when) the range of the shear rate satisfies the above range, a carbon coating layer may be effectively formed on the surface of the core particle while reducing or preventing damage to the core particle.

The rotation speed of the blade within the device for applying the shear force may be less than or equal to about 18 m/s, less than or equal to about 15 m/s, or less than or equal to about 10 m/s, and greater than or equal to about 3 m/s, greater than or equal to about 4 m/s, or greater than or equal to about 5 m/s. If (when) the rotation speed of the blade satisfies the above range, a carbon coating layer may be effectively formed on the surface of the core particle while reducing or preventing damage to the core particle.

The step (iii) may be performed at a speed in a range of about 500 rpm to about 6,000 rpm, and for example, it may be performed at a speed of about 600 rpm to about 5,500 rpm, about 700 rpm to about 5,000 rpm, or about 800 rpm to about 4,000 rpm. If (when) the performance conditions of this step satisfy the above range, a carbon coating layer may be effectively formed on the surface of the core particle while reducing or preventing damage to the core particle.

In the step (iii), the core particle, particulate graphite, and carbon nanotube may be mixed in a dry method. In this case, manufacturing costs may be reduced, and the pellet density and conductivity of the positive electrode active material may be further improved because a carbon coating layer is formed thinly and uniformly, or substantially uniformly. Herein, the dry method may mean a state not intentionally contacting a solvent such as a process solvent, or a state not intentionally including a solvent. For example, the dry mixing may be performed using a method known to those skilled in the art, and for example, a dry mixer (e.g., a Nobilta mixer), a homogenizer, or a Henschel mixer may be used.

### Positive Electrode

In some example embodiments, a positive electrode includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the aforementioned positive electrode active materials. For example, the positive electrode active material may be included in an amount in a range of about 60 wt% to about 99.9 wt%, about 70 wt% to about 99.9 wt%, about 80 wt% to about 99.9 wt%, about 90 wt% to about 99.9 wt%, or about 95 wt% to about 99.9 wt% based on 100 wt% of the total weight of the positive electrode active material layer.

Hereinafter, the configuration of the positive electrode according to some example embodiments is described in detail.

### Current Collector

The current collector is not particularly limited as long as the current collector is conductive and does not cause adverse chemical changes in the positive electrode and in the rechargeable lithium battery including the positive electrode. For example, the current collector may include a thin film of at least one of aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof, and may for example include an aluminum thin film.

The current collector may have various forms such as a plate, a thin body, a film, a sheet, a foil, a net, a porous body, a foam body, or a non-woven body. For example, the current collector may include microscopic irregularities on its surface, which may improve adhesive strength to the positive electrode active material.

A thickness of the current collector may be in a range of about 1 µm to about 20 µm, for example about 5 µm to about 15 µm, or about 7 µm to about 10 µm.

The positive electrode active material layer may further include a binder, a conductive material, or a combination thereof.

### Binder

The binder improves binding properties of positive electrode active material particles with one another and with a current collector. For example, the binder may include one or more of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The binder may be included in an amount in a range of about 0.1 wt% to about 1 wt%, and for example, less than about 1.0 wt%, or less than or equal to about 0.9 wt% based on 100 wt% of the total weight of the positive electrode active material layer.

### Conductive Material

The conductive material is included to provide electrode conductivity, and any electrically conductive material may be used as a conductive material unless the electrically conductive material causes an adverse chemical change in the battery. For example, the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may be included in an amount in a range of about 0 wt% to about 1 wt%, for example, about 0.05 wt% to about 1 wt%, for example, less than about 1.0 wt%, less than or equal to about 0.8 wt%, less than or equal to about 0.7 wt%, or less than or equal to about 0.5 wt% based on 100 wt% of the total weight of the positive electrode active material layer. Because the positive electrode active material layer includes the positive electrode active material described above, desired or improved electronic conductivity may be exhibited, and low resistance and high positive electrode density may be exhibited even if (when) the positive electrode active material layer does not include a separate conductive material, or includes a substantially small amount of conductive material.

As an example, the density of the positive electrode active material layer may be in a range of about 2.0 g/cc to about 6.0 g/cc, for example, about 2.3 g/cc to about 5.8 g/cc, about 2.5 g/cc to about 5.7 g/cc, or about 2.5 g/cc to about 5.5 g/cc. In addition, the density of the positive electrode active material layer may be in a range of about 3.5 g/cc to about 5.0 g/cc, about 3.7 g/cc to about 4.9 g/cc, about 3.8 g/cc to about 4.8 g/cc, or about 4.0 g/cc to about 4.5 g/cc. If (when) the density of the positive electrode active material layer satisfies the above range, the energy density of a rechargeable lithium battery can be improved. For example, because the positive electrode active material described above has high particle strength and lubrication degree of the particle surface, a compressing process may be performed with higher pressure. In addition, because the lubrication degree of the surface of the positive electrode active material is high, the compression efficiency of the positive electrode may be increased by the sliding effect. In addition, because the compressing process may be performed with higher pressure, pores of the electrode plate in the positive electrode active material layer may be reduced, and the density of the positive electrode active material layer may be further improved.

The adhesive strength of the positive electrode active material layer to the current collector may be greater than or equal to about 0.5 gf/mm, and the resistivity of the positive electrode active material layer may be less than or equal to about 40 Ω·cm. For example, the adhesive strength of the positive electrode active material layer to the current collector may be greater than or equal to about 1.0 gf/mm, greater than or equal to about 1.5 gf/mm, greater than or equal to about 2.0 gf/mm, or greater than or equal to about 2.5 gf/mm, and may be less than or equal to about 30 gf/mm, less than or equal to about 28 gf/mm, less than or equal to about 25 gf/mm, or less than or equal to about 23 gf/mm. For example, the resistivity of the positive electrode active material layer may be less than or equal to about 35 Ω·cm, less than or equal to about 30 Ω·cm, less than or equal to about 25 Ω·cm, or less than or equal to about 20 Ω·cm, and may be greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. For example, because the positive electrode active material layer includes the aforementioned positive electrode active material, the positive electrode active material layer can exhibit desired or improved electronic conductivity and exhibit low resistance even if (when) the positive electrode active material layer does not include a separate conductive material, or includes a substantially small amount of conductive material, and may exhibit high adhesive strength to the electrode plate even if (when) the positive electrode active material layer includes a substantially small amount of binder.

A porosity of the positive electrode may be less than or equal to about 30%, less than or equal to about 25%, or less than or equal to about 20%, and greater than or equal to about 1%, greater than or equal to about 5%, or greater than or equal to about 7%. If (when) the porosity of the positive electrode satisfies the above range, the capacity and energy density of the positive electrode may be improved. Herein, the porosity of the positive electrode means a ratio of volume of the pores present within the positive electrode to a total volume of the positive electrode, and may be measured, for example, by mercury porosimetry.

### Rechargeable Lithium Battery

A rechargeable lithium battery according to some example embodiments includes a positive electrode including a current collector, and a positive electrode active material layer on the current collector, wherein the positive electrode active material layer includes the aforementioned positive electrode active material; a negative electrode; and an electrolyte. The rechargeable lithium battery may be a lithium ion battery using a liquid electrolyte, or an all-solid-state rechargeable battery or a semi-solid rechargeable battery using a solid electrolyte. For convenience, the configuration of a lithium-ion battery is described in detail below.

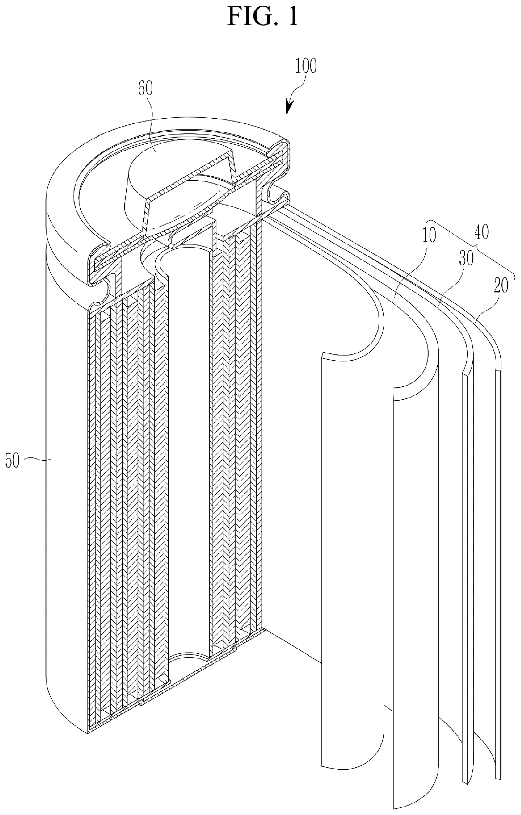

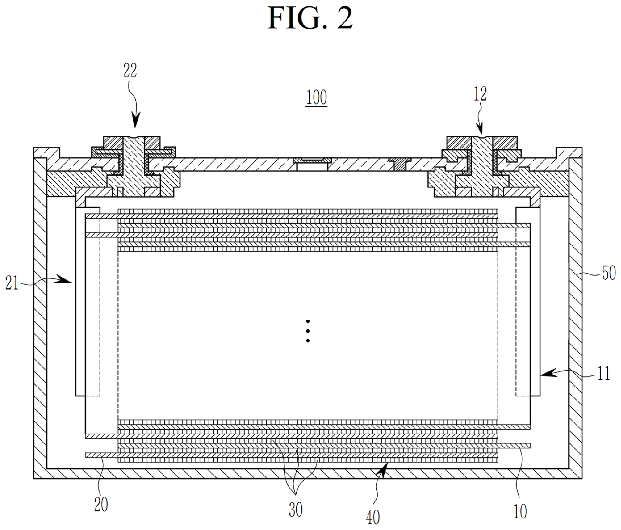

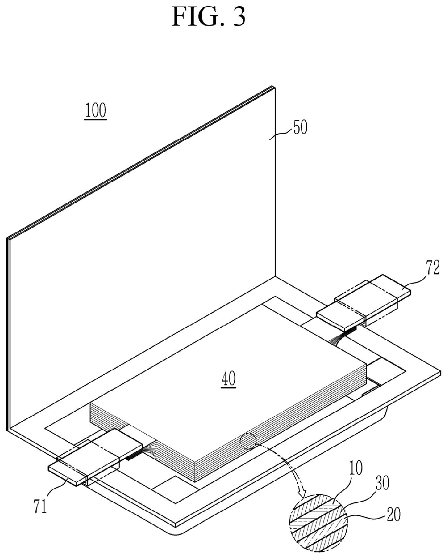

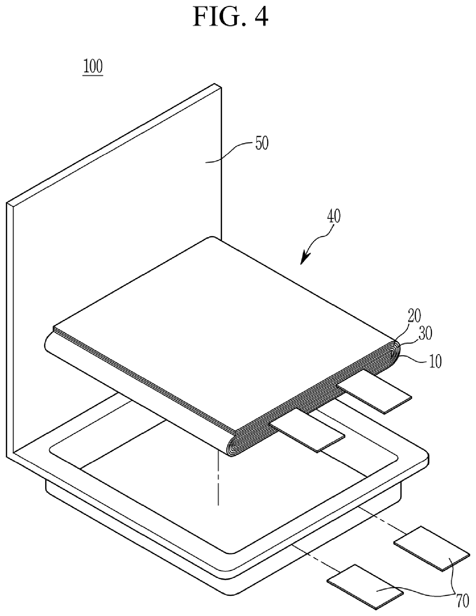

The rechargeable lithium battery may be classified into cylindrical, prismatic, pouch-shaped, coin-shaped, and the like, depending on the shape. FIG. 1 to FIG. 4 are schematic diagrams showing the rechargeable lithium battery according to some example embodiments, where FIG. 1 is a cylindrical battery, FIG. 2 is a prismatic battery, and FIG. 3 and FIG. 4 are a pouch-shaped battery.

Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to some example embodiments may be rechargeable at a high voltage, or may be suitable for being driven at a high voltage. For example, the charge voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to some example embodiments, the rechargeable lithium battery can significantly reduce an amount of gas generated even when charged at high voltage, and can achieve high capacity and long cycle-life characteristics.

### Negative Electrode

The negative electrode may include a current collector, and a negative electrode active material layer on the current collector. The negative electrode active material layer includes a negative electrode active material, and may further include a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of about 0.5 µm to about 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon, hard carbon, a mesophase pitch carbonized product, and calcined coke.

When the silicon-carbon composite includes silicon and amorphous carbon, an amount of silicon may be in a range of about 10 wt% to about 50 wt%, and an amount of amorphous carbon may be in a range of about 50 wt% to about 90 wt% based on 100 wt% of the silicon-carbon composite. When the silicon-carbon composite includes silicon, amorphous carbon, and crystalline carbon, an amount of silicon may be in a range of about 10 wt% to about 50 wt%, an amount of crystalline carbon may be in a range of about 10 wt% to about 70 wt%, and an amount of amorphous carbon may be in a range of about 20 wt% to about 40 wt% based on 100 wt% of the silicon-carbon composite.

For example, a thickness of the amorphous carbon coating layer may be in a range of about 5 nm to about 100 nm. An average particle diameter (D₅₀) of the silicon particles (primary particles) may be in a range of about 10 nm to about 1 µm, or about 10 nm to about 200 nm. The silicon particles may be in the form of silicon alone, in the form of a silicon alloy, or in an oxidized form. The oxidized form of silicon may be represented by SiOₓ (0<x≤2). At this time, the atomic content ratio of Si:O, which indicates a degree of oxidation, may be in a range of about 99:1 to about 33:67.

The Si-based negative electrode active material or Sn-based negative electrode active material may be mixed with the carbon-based negative electrode active material. When a Si-based negative electrode active material or a Sn-based negative electrode active material is used in combination with a carbon-based negative electrode active material, a weight ratio of the Si-based negative electrode active material or the Sn-based negative electrode active material to the carbon-based negative electrode active material may be in a range of about 1:99 to about 90:10.

The negative electrode active material may be included in an amount in a range of about 80 wt% to about 99 wt, for example, about 85 wt% to about 99 wt%, or about 90 wt% to about 99 wt%% based on 100 wt% of the total weight of the negative electrode active material layer.

### Binder

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The binder may be included in an amount in a range of about 0.5 wt% to about 5 wt%, for example, about 0.5 wt% to about 4 wt%, or about 1 wt% to about 3 wt% based on 100 wt% of the total weight of the negative electrode active material layer.

### Conductive Material

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may be included in an amount in a range of about 0.5 wt% to about 5 wt%, for example, about 0.5 wt% to about 4 wt%, or about 1 wt% to about 3 wt% based on 100 wt% of the total weight of the negative electrode active material layer.

### Current Collector

There is no particular limitation on the negative electrode current collector as long as the negative electrode current collector does not cause adverse chemical changes in the negative electrode and the rechargeable lithium battery including the negative electrode. For example, the negative electrode current collector can be or include at least one of a copper foil, a nickel foil, a stainless steel foil, a titanium foil, a nickel foam, a copper foam, a polymer substrate coated with a conductive metal, or a combination thereof.

The negative electrode current collector may have various forms, such as a plate, a thin body, a film, a sheet, a foil, a net, a porous body, a foam body, or a non-woven body. For example, the negative electrode current collector may include microscopic irregularities on its surface, which may improve adhesive strength to the negative electrode active material.

A thickness of the negative electrode current collector may be in a range of about 1 µm to about 20 µm, for example, about 5 µm to about 15 µm, or about 7 µm to about 10 µm.

### Electrolyte

For example, the electrolyte for a rechargeable lithium battery may be or include an electrolyte solution, and may include a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, t-butyl acetate, methyl propionate, ethyl propionate, propyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like.

The ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone, or in a mixture of two or more types of solvents, and when two or more types of solvents are used in a mixture, a mixing ratio can be adjusted as desired according to the desired battery performance, which is widely known to those working in the field.

When using a carbonate-based solvent, a cyclic carbonate and a chain carbonate may be mixed together, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed in a volume ratio in a range of about 1:1 to about 30:1.

The electrolyte solution may further include at least one of vinylethylene carbonate, vinylene carbonate or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (when) the concentration of lithium salt is within the above range, the electrolyte solution has desired ionic conductivity and viscosity, and thus desired or improved performance can be achieved, and lithium ions can move effectively.

### Separator

Depending on the type of the rechargeable lithium battery, the rechargeable lithium battery may further include a separator between the positive electrode and the negative electrode. The separator may include at least one of polyethylene, polypropylene, polyvinylidene fluoride, or a multilayer film of two or more layers thereof, and may be a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and TEFLON (polytetrafluoroethylene), or a copolymer or mixture of two or more thereof. The porous substrate may include glass fibers, or may comprise a composite membrane of polymer and glass fibers.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm. Herein, the average particle diameter (D₅₀) of the inorganic particles may be obtained by randomly selecting about 20 particles from a scanning electron microscope image of the inorganic particles, measuring their particle diameters (diameter, long diameter, or major axis length) to obtain a particle size distribution, and then taking the size of particles having a cumulative volume of 50 vol% from the particle size distribution as the average particle diameter.

The organic material and the inorganic material may be mixed in one coating layer, or a coating layer including an organic material and a coating layer including an inorganic material may be stacked together. The thickness of the coating layer may be in a range of about 0.5 µm to about 20 µm, for example, about 1 µm to about 10 µm, or about 1 µm to about 5 µm.

The rechargeable lithium battery according to some example embodiments may be applicable to, e.g., automobiles, mobile phones, or various types of electrical devices, but is not limited thereto.

Examples and comparative examples of the present disclosure are described below. However, the following examples are only examples of the present disclosure, and the present disclosure is not limited to the following examples.

### Example 1

### (1) Preparation of Positive Electrode Active Material

Preparation of Core Particle: Bimodal core particles were prepared by mixing large-particle lithium cobalt oxide (LCO, LiCoO₂) with an average particle diameter (D₅₀) of 17 µm and small-particle lithium cobalt oxide (LCO, LiCoO₂) with an average particle diameter (D₅₀) of 5 µm in a weight ratio of 7:3.

Preparation of Particulate graphite: Flake-shaped graphite (G5 (C-one), average particle diameter (D₅₀): 3 µm, a ratio (I_{D}/I_{G}) of a peak intensity (I_{D}) near 1350 cm⁻¹ to a peak intensity (I_{G}) near 1580 cm⁻¹ in Raman spectrum: 0.12) was mixed with ZrO₂ beads having a particle diameter of 2 mm, which is 10 times the weight of the flake-shaped graphite. Thereafter, the flake-shaped graphite was milled for 1 hour under a condition of 1,000 rpm to prepare particulate graphite. At this time, the average particle diameter (D₅₀) of the particulate graphite was 0.26 µm, and the ratio (I_{D}/I_{G}) of the peak intensity (I_{D}) near 1350 cm⁻¹ to the peak intensity (I_{G}) near 1580 cm⁻¹ in the Raman spectrum was 0.28.

Obtaining Positive Electrode Active Material: 99.8 wt% of the core particles, 0.15 wt% of the particulate graphite, and 0.05 wt% of TWCNT were added into a Nobilta mixer (manufacturer: Hosokawa Co., Ltd.). After adjusting the mixing conditions to 3,000 rpm, core particle, particulate graphite, and carbon nanotubes were mixed for 10 minutes to obtain a positive electrode active material.

### (2) Manufacturing of Positive Electrode

99.1 wt% of the positive electrode active material prepared in the (1), 0.2 wt% of carbon nanotube as a conductive material, and 0.7 wt% of polyvinylidene fluoride as a binder were dispersed in an N-methylpyrrolidone (NMP) solvent to prepare a positive electrode active material slurry. The positive electrode active material slurry was coated on a 12 µm-thick aluminum substrate (a current collector) and dried to form a positive electrode active material layer and then, compressed to manufacture a positive electrode. In the manufactured positive electrode, the loading level of the positive electrode active material layer was 16 mg/cm², and the density of the positive electrode active material layer was 3.38 g/cc. In addition, as a result of conducting SEM analysis for the compressed positive electrode, the thickness of the positive electrode active material layer was confirmed to be about 50 µm.

### (3) Manufacturing of Rechargeable Lithium Battery Cell

The positive electrode manufactured in the (2) and a lithium metal counter electrode were used, and a separator having a polyethylene polypropylene multilayer structure was interposed therebetween. An electrolyte solution, which prepared by adding 1.3 M LiPF₆ lithium salt to a solvent including ethylene carbonate, propylene carbonate, and propyl propionate mixed in a volume ratio of 10:15:75, was injected thereinto to manufacture a rechargeable lithium battery cell in a conventional method.

### Example 2

A positive electrode active material, a positive electrode, and a rechargeable lithium battery cell were manufactured in substantially the same manner as in Example 1, except that in the process of '(1) Preparation of positive electrode active material' of Example 1, the mixing amount of particulate graphite was changed to 0.1 wt% and the mixing amount of carbon nanotubes was changed to 0.1 wt%.

### Example 3

A positive electrode active material, a positive electrode, and a rechargeable lithium battery cell were manufactured in substantially the same manner as in Example 1, except that in the process of '(1) Preparation of positive electrode active material' of Example 1, the carbon nanotubes were changed from TWCNTs to MWCNTs.

### Comparative Example 1

LiCoO₂ (LCO) used in the process of '(1) Preparation of positive electrode active material' of Example 1 was prepared as a positive electrode active material. A positive electrode and a rechargeable lithium battery cell were manufactured using the prepared positive electrode active material in substantially the same manner as in Example 1.

### Comparative Example 2

### (1) Preparation of Positive Electrode Active Material

Preparation of Core Particle: Bimodal core particles were prepared by mixing large-particle lithium cobalt oxide (LCO, LiCoO₂) with an average particle diameter (D₅₀) of 17 µm and small-particle lithium cobalt oxide (LCO, LiCoO₂) with an average particle diameter (D₅₀) of 5 µm in a weight ratio of 7:3.

Preparation of Particulate graphite: Flake-shaped graphite (G5 (C-one), average particle diameter (D₅₀): 3 µm, a ratio (I_{D}/I_{G}) of a peak intensity (I_{D}) near 1350 cm⁻¹ to a peak intensity (I_{G}) near 1580 cm⁻¹ in Raman spectrum: 0.12) was mixed with ZrO₂ beads having a particle diameter of 2 mm, which is 10 times the weight of the flake-shaped graphite. Thereafter, the flake-shaped graphite was milled for 1 hour under a condition of 1,000 rpm to prepare particulate graphite. At this time, the average particle diameter (D₅₀) of the particulate graphite was 0.26 µm, and the ratio (I_{D}/I_{G}) of the peak intensity (I_{D}) near 1350 cm⁻¹ to the peak intensity (I_{G}) near 1580 cm⁻¹ in the Raman spectrum was 0.28.

Obtaining Positive Electrode Active Material: 99.8 wt% of the core particles and 0.2 wt% of the particulate graphite were added to a Nobilta mixer (manufacturer: Hosokawa Co., Ltd.). After adjusting the mixing conditions to 3,000 rpm, the core particle and particulate graphite were mixed for 10 minutes to obtain a positive electrode active material.

### (2) Manufacturing of Positive Electrode and Rechargeable Lithium Battery Cells

Using the positive electrode active material of Comparative Example 2 prepared in the above (1), a positive electrode and a rechargeable lithium battery cell were manufactured by substantially the same method as in Example 1.

### Comparative Example 3

### (1) Preparation of Positive Electrode Active Material

Preparation of Core Particle: Bimodal core particles were prepared by mixing large-particle lithium cobalt oxide (LCO, LiCoO₂) with an average particle diameter (D₅₀) of 17 µm and small-particle lithium cobalt oxide (LCO, LiCoO₂) with an average particle diameter (D₅₀) of 5 µm in a weight ratio of 7:3.

Obtaining of Positive Electrode Active Material: 99.8 wt% of the core particles and 0.2 wt% of TWCNT were added to a Nobilta mixer (manufacturer: Hosokawa Co., Ltd.). After adjusting the mixing conditions to 3,000 rpm, the core particle and carbon nanotubes were mixed for 10 minutes to obtain a positive electrode active material.

### (2) Manufacturing of Positive Electrode and Rechargeable Lithium Battery Cells

Using the positive electrode active material of Comparative Example 3 prepared in (1) above, a positive electrode and a rechargeable lithium battery cell were manufactured in substantially the same manner as in Example 1.

### Evaluation Example 1: Electron Microscope Image Analysis

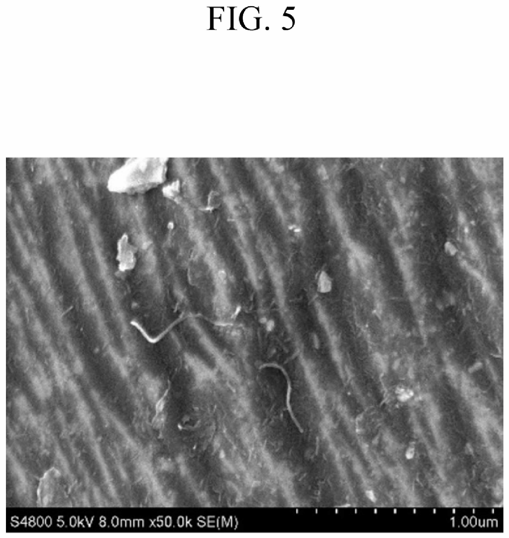

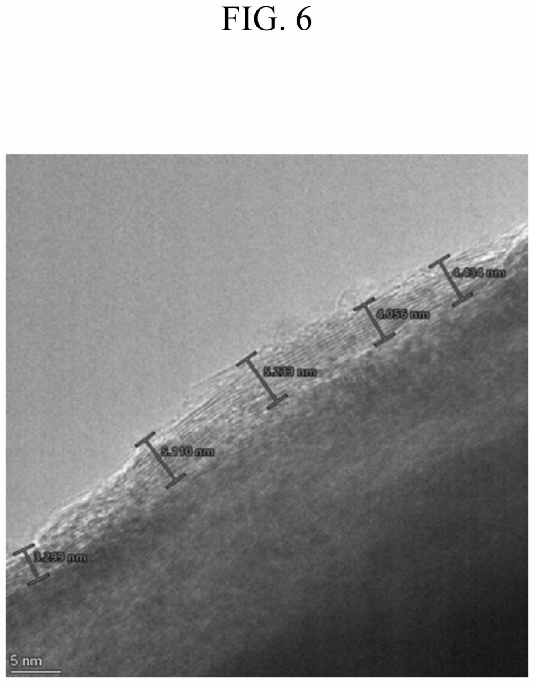

A scanning electron microscope image of the surface of the positive electrode active material manufactured in Example 1 is shown in FIG. 5, and a transmission electron microscope image of the cross-section of the positive electrode active material manufactured in Example 1 is shown in FIG. 6.

Referring to FIGS. 5 and 6, the positive electrode active material of Example 1 had a carbon coating layer including graphene and carbon nanotubes formed on the surface of the core particle. In addition, the carbon coating layer had a film form that continuously surrounded the surface of the core particle. Specifically, in the scanning electron microscope image, the thread-like portion represents carbon nanotubes, and the black portion represents graphene derived from particulate graphite. That is, a carbon coating layer including both graphene and carbon nanotubes was achieved on the surface of the core particle.

In addition, the cross-section of the positive electrode active material of Example 1 was observed via transmission electron microscopy (TEM). The results confirmed that the carbon coating layer comprised graphene having a layered structure of about 13 layers, and that the thickness of the carbon coating layer was about 3.299 nm to about 5.233 nm.

### Evaluation Example 2: Measurement of Physical Properties of Positive Electrode Active Material

The pellet density and powder resistance of the positive electrode active materials prepared in Examples and Comparative Examples were analyzed, and the results are shown in Table 1 below.

Specific evaluation methods are as follows.

### (1) Pellet Density

3 g of positive electrode active material was placed in a pellet manufacturing mold and maintained at 9 tons for 30 seconds to manufacture pellets. The pellet density was calculated using the thickness and weight of the pellet and the diameter of the mold.

### (2) Powder Resistance

Using a powder resistance meter (MCP-PD600, Nittoseiko Analytech Co.), 1 g of positive electrode active material was pressurized from 0 kN to 20 kN, and the powder resistance at 20 kN was measured.

### Evaluation Example 3: Performance Analysis of Rechargeable Lithium Battery Cell

Energy density was analyzed for the rechargeable lithium battery cells manufactured in Examples and Comparative Examples, and the results are shown in Table 1 below.

Specific evaluation methods are as follows.

After punching the compressed positive electrode plate to a size with a diameter of 14 mm, the thickness and the weight were measured to calculate the density of the mixture layer (positive electrode active material layer). Thereafter, energy density was calculated by multiplying the density of the mixture layer (positive electrode active material layer), the weight fraction of positive electrode active material, and the initial discharge capacity. Herein, the initial discharge capacity was measured by subjecting the rechargeable lithium battery cells to an initial charge and discharge cycle at 25 °C, where the cells were charged at a constant current (0.35 C) and a constant voltage (4.56 V, 0.05 C cut-off), and then discharged at a constant current (0.35 C) to 3.0 V.

**Table 1:**

| | Composition of positive electrode active material | | | Positive electrode active material | | Rechargeable lithium battery cell |
|---|---|---|---|---|---|---|
| | Amount of core particle (wt%) | Amount of particulate graphite (wt%) | Type and Amount of carbon nanotubes | Pellet density (g/cm³) | Powder resistance (Ω·cm) | Energy density (mAh/cc) |
| Example 1 | 99.8 | 0.15 | TWCNT 0.05 wt% | 4.39 | 1,825 | 791 |
| Example 2 | 99.8 | 0.1 | TWCNT 0.1 wt% | 4.37 | 2,870 | 786 |
| Example 3 | 99.8 | 0.15 | MWCNT 0.05 wt% | 4.37 | 2,243 | 785 |
| Comparative Example 1 | 100 | - | - | 4.26 | 178,902 | 768 |
| Comparative Example 2 | 99.8 | 0.2 | - | 4.34 | 3,483 | 782 |
| Comparative Example 3 | 99.8 | - | TWCNT 0.2 wt% | 4.28 | 110,352 | 773 |

Referring to Table 1, for Examples 1 to 3, the pellet density was 4.37 g/cm³ to 4.39 g/cm³, the powder resistance was 1,825 Ω·cm to 2,870 Ω·cm, and the energy density was 785 mAh/cc to 791 mAh/cc.

On the contrary, in the case of Comparative Example 1, which did not include a carbon coating layer, the pellet density was measured to be substantially low, the powder resistance was measured to be substantially high, and the energy density was measured to be substantially low compared to Examples 1 to 3. That is, the electrical conductivity of the positive electrode active material can be improved because the pellet density of the positive electrode active material is improved and the powder resistance is lowered by including a carbon coating layer.

Additionally, in the case of Comparative Example 2, where the carbon coating layer included graphene alone, the pellet density was measured to be low, the powder resistance was measured to be high, and the energy density was measured to be low. In the case of Comparative Example 3, where the carbon coating layer included carbon nanotubes alone, the pellet density was measured to be substantially low, the powder resistance was measured to be substantially high, and the energy density was measured to be substantially low. That is, the electrical conductivity of the positive electrode active material was improved as the carbon coating layer included both carbon nanotubes and graphene.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

### Description of symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

In the following, further preferred embodiments are described to facilitate understanding:
Embodiment 1. A positive electrode active material comprising:
   a core particle comprising a lithium cobalt-based composite oxide; and
   a carbon coating layer on the surface of the core particle,
   wherein the carbon coating layer comprises carbon nanotubes and graphene having a layered structure in a range of 2 layers to 50 layers.
Embodiment 2. The positive electrode active material as embodied in embodiment 1, wherein an interlayer spacing (d₀₀₂) of the layered structure is in a range of 0.320 nm to 0.350 nm.
Embodiment 3. The positive electrode active material as embodied in any one of the preceding embodiments, wherein:
   a thickness of the graphene is less than or equal to 20 nm; and
   a size of the graphene is less than or equal to 2.5 µm.
Embodiment 4. The positive electrode active material as embodied in any one of the preceding embodiments, wherein the graphene has a ratio (I_{D}/I_{G}) of a peak intensity (I_{D}) near 1350 cm⁻¹ to a peak intensity (I_{G}) near 1580 cm⁻¹ in a Raman spectrum in a range of 0.15 to 0.50.
Embodiment 5. The positive electrode active material as embodied in any one of the preceding embodiments, wherein the graphene of the carbon coating layer is included in an amount in a range of 0.02 wt% to 3.0 wt% based on 100 wt% of a total weight of the positive electrode active material.
Embodiment 6. The positive electrode active material as embodied in any one of the preceding embodiments, wherein the graphene of the carbon coating layer is derived from particulate graphite having an average size (D₅₀) of less than or equal to 2.5 µm.
Embodiment 7. The positive electrode active material as embodied in any one of the preceding embodiments, wherein the carbon nanotubes comprise one or more of single-walled carbon nanotubes (SWCNTs), thin-walled carbon nanotubes (TWCNTs), and multi-walled carbon nanotubes (MWCNTs).
Embodiment 8. The positive electrode active material as embodied in any one of the preceding embodiments, wherein the carbon nanotubes of the carbon coating layer are included in an amount in a range of 0.02 wt% to 3.0 wt% based on 100 wt% of the total weight of the positive electrode active material.
Embodiment 9. The positive electrode active material as embodied in any one of the preceding embodiments, wherein the core particle comprises a lithium cobalt-based composite oxide represented by Chemical Formula 1:

   Chemical Formula 1: Liₐ₁Coₓ₁M¹_{y1}O_{2-b1}X_{b1};

   wherein:
   0.9≤a1≤1.8, 0.7≤x1≤1, 0≤y1≤0.3, 0.9≤x1+y1≤1.1, and 0≤b1≤0.1;
   M¹ comprises one or more of Al, B, Ba, Ca, Ce, Cr, Cu, Fe, Mg, Mn, Mo, Ni, Se, Si, Sn, Sr, Ti, V, W, Y, Zn, and Zr; and
   X comprises one or more of F, P, and S.
Embodiment 10. The positive electrode active material as embodied in any one of the preceding embodiments, wherein the core particle comprises first particles having an average particle diameter (D₅₀) in a range of 8 µm to 20 µm, and second particles having an average particle diameter (D₅₀) in a range of 0.5 µm to 6 µm.
Embodiment 11. The positive electrode active material as embodied in any one of the preceding embodiments, wherein a thickness of the carbon coating layer is in a range of 3 nm to 50 nm.
Embodiment 12. The positive electrode active material as embodied in any one of the preceding embodiments, wherein the carbon coating layer is in a form of a film continuously surrounding the surface of the core particle.
Embodiment 13. The positive electrode active material as embodied in any one of the preceding embodiments, wherein:
   a pellet density of the positive electrode active material is greater than or equal to 4.35 g/cm³; and
   a powder resistance of the positive electrode active material is less than or equal to 10,000 Ω·cm.
Embodiment 14. A method for preparing a positive electrode active material, the method comprising:
   (i) preparing a core particle comprising a lithium cobalt-based composite oxide;
   (ii) pulverizing flake-shaped graphite having an average size (D₅₀) in a range of 3 µm to 25 µm to prepare particulate graphite having an average size (D₅₀) of less than or equal to 2.5 µm; and
   (iii) dry-mixing the core particle, the particulate graphite, and carbon nanotubes to obtain a positive electrode active material.
Embodiment 15. The method for preparing the positive electrode active material as embodied in embodiment 14, wherein:
   in the pulverizing, the flake-shaped graphite is pulverized by ball milling, and
   the ball milling uses zirconia beads having a size in a range of 1 mm to 25 mm and is performed at a speed in a range of 200 rpm to 5,000 rpm for a duration in a range of 30 minutes to 4 hours.
Embodiment 16. The method for preparing the positive electrode active material as embodied in embodiment 14 or 15, wherein the particulate graphite is mixed in an amount in a range of 0.02 wt% to 3.0 wt% based on 100 wt% of the total weight of the core particle, the particulate graphite, and the carbon nanotubes.
Embodiment 17. The method for preparing the positive electrode active material as embodied in any one of the preceding embodiments 14 to 16, wherein the carbon nanotubes are mixed in an amount in a range of 0.02 wt% to 3.0 wt%, based on 100 wt% of a total weight of the core particle, the particulate graphite, and the carbon nanotubes.
Embodiment 18. The method for preparing the positive electrode active material as embodied in any one of the preceding embodiments 14 to 17, wherein:
   in the dry-mixing, the core particles, the particulate graphite, and the carbon nanotubes are mixed using a mixer, and
   the core particle, the particulate graphite, and the carbon nanotubes are mixed at a speed in a range of 500 rpm to 6,000 rpm.
Embodiment 19. A rechargeable lithium battery, comprising:
   a positive electrode comprising
   a current collector, and
   a positive electrode active material layer on the current collector,
   wherein the positive electrode active material layer includes the positive electrode active material as embodied in any one of the preceding embodiments 1 to 13;
   a negative electrode; and
   an electrolyte.
Embodiment 20. The rechargeable lithium battery as embodied in embodiment 19, wherein:
   the positive electrode active material layer further comprises a binder and a conductive material;
   the binder is included in an amount in a range of 0.1 wt% to 1 wt% based on 100 wt% of a total weight of the positive electrode active material layer; and
   the conductive material is included in an amount in a range of 0.05 wt% to 1 wt% based on 100 wt% of a total weight of the positive electrode active material layer.

## Claims

1. A positive electrode active material comprising:
a core particle comprising a lithium cobalt-based composite oxide; and
a carbon coating layer on the surface of the core particle,
wherein the carbon coating layer comprises carbon nanotubes and graphene having a layered structure in a range of 2 layers to 50 layers.

2. The positive electrode active material as claimed in claim 1, wherein an interlayer spacing (d₀₀₂) of the layered structure is in a range of 0.320 nm to 0.350 nm; and/or
a thickness of the graphene is less than or equal to 20 nm; and
a size of the graphene is less than or equal to 2.5 µm.

3. The positive electrode active material as claimed in claims 1 or 2, wherein the graphene has a ratio (I_{D}/I_{G}) of a peak intensity (I_{D}) near 1350 cm⁻¹ to a peak intensity (I_{G}) near 1580 cm⁻¹ in a Raman spectrum in a range of 0.15 to 0.50; and/or the graphene of the carbon coating layer is included in an amount in a range of 0.02 wt% to 3.0 wt% based on 100 wt% of a total weight of the positive electrode active material.

4. The positive electrode active material as claimed in any one of claims 1 to 3, wherein the graphene of the carbon coating layer is derived from particulate graphite having an average size (D₅₀) of less than or equal to 2.5 µm; and/or the carbon nanotubes comprise one or more of single-walled carbon nanotubes (SWCNTs), thin-walled carbon nanotubes (TWCNTs), and multi-walled carbon nanotubes (MWCNTs).

5. The positive electrode active material as claimed in any one of claims 1 to 4, wherein the carbon nanotubes of the carbon coating layer are included in an amount in a range of 0.02 wt% to 3.0 wt% based on 100 wt% of the total weight of the positive electrode active material.

6. The positive electrode active material as claimed in any one of claims 1 to 5, wherein the core particle comprises a lithium cobalt-based composite oxide represented by Chemical Formula 1:
Chemical Formula 1: Liₐ₁Coₓ₁M¹_{y1}O_{2-b1}X_{b1};
wherein:
0.9≤a1≤1.8, 0.7≤x1≤1, 0≤y1≤0.3, 0.9≤x1+y1≤1.1, and 0≤b1≤0.1;
M¹ comprises one or more of Al, B, Ba, Ca, Ce, Cr, Cu, Fe, Mg, Mn, Mo, Ni, Se, Si, Sn, Sr, Ti, V, W, Y, Zn, and Zr; and
X comprises one or more of F, P, and S.

7. The positive electrode active material as claimed in any one of claims 1 to 6, wherein the core particle comprises first particles having an average particle diameter (D₅₀) in a range of 8 µm to 20 µm, and second particles having an average particle diameter (D₅₀) in a range of 0.5 µm to 6 µm; and/or a thickness of the carbon coating layer is in a range of 3 nm to 50 nm.

8. The positive electrode active material as claimed in any one of claims 1 to 7, wherein the carbon coating layer is in a form of a film continuously surrounding the surface of the core particle.

9. The positive electrode active material as claimed in any one of claims 1 to 8, wherein:
a pellet density of the positive electrode active material is greater than or equal to 4.35 g/cm³; and
a powder resistance of the positive electrode active material is less than or equal to 10,000 Ω·cm.

10. A method for preparing a positive electrode active material, the method comprising:
(i) preparing a core particle comprising a lithium cobalt-based composite oxide;
(ii) pulverizing flake-shaped graphite having an average size (D₅₀) in a range of 3 µm to 25 µm to prepare particulate graphite having an average size (D₅₀) of less than or equal to 2.5 µm; and
(iii) dry-mixing the core particle, the particulate graphite, and carbon nanotubes to obtain a positive electrode active material.

11. The method for preparing the positive electrode active material as claimed in claim 10, wherein:
in the pulverizing, the flake-shaped graphite is pulverized by ball milling, and
the ball milling uses zirconia beads having a size in a range of 1 mm to 25 mm and is performed at a speed in a range of 200 rpm to 5,000 rpm for a duration in a range of 30 minutes to 4 hours.

12. The method for preparing the positive electrode active material as claimed in any one of claims 10 or 11, wherein the particulate graphite is mixed in an amount in a range of 0.02 wt% to 3.0 wt% based on 100 wt% of the total weight of the core particle, the particulate graphite, and the carbon nanotubes.

13. The method for preparing the positive electrode active material as claimed in any one of claims 10 to 12, wherein the carbon nanotubes are mixed in an amount in a range of 0.02 wt% to 3.0 wt%, based on 100 wt% of a total weight of the core particle, the particulate graphite, and the carbon nanotubes.

14. The method for preparing the positive electrode active material as claimed in any one of claims 10 to 13, wherein:
in the dry-mixing, the core particles, the particulate graphite, and the carbon nanotubes are mixed using a mixer, and
the core particle, the particulate graphite, and the carbon nanotubes are mixed at a speed in a range of 500 rpm to 6,000 rpm.

15. A rechargeable lithium battery (100), comprising:
a positive electrode (10) comprising
a current collector, and
a positive electrode active material layer on the current collector,
wherein the positive electrode active material layer includes the positive electrode active material as claimed in any one of the preceding claims 1 to 9;
a negative electrode (20); and
an electrolyte;
wherein preferably:
the positive electrode active material layer further comprises a binder and a conductive material;
the binder is included in an amount in a range of 0.1 wt% to 1 wt% based on 100 wt% of a total weight of the positive electrode active material layer; and
the conductive material is included in an amount in a range of 0.05 wt% to 1 wt% based on 100 wt% of a total weight of the positive electrode active material layer.
